# EUROPEAN PATENT SPECIFICATION

(11) **EP 2 898 590 B1**
(45) Date of publication and mention of the grant of the patent: **16.11.2016**
(21) Application number: 13801765.2
(22) Date of filing: 20.09.2013
(51) Int. Cl.: H02K 3/28, H02K 3/18, H02K 7/18, F03D 9/00

(54) **ACTIVE ASSEMBLY OF A WIND TURBINE ROTATING ELECTRIC MACHINE**
AKTIVE ANORDNUNG EINER ELEKTRISCHEN DREHMASCHINE EINER WINDTURBINE
ENSEMBLE ACTIF D'UNE MACHINE ÉLECTRIQUE TOURNANTE DE TURBINE ÉOLIENNE

(30) Priority: 20.09.2012 IT MI20121568
(43) Date of publication of application: 29.07.2015
(73) Proprietor: WINDFIN B.V., 2451 VW Leimuiden (NL)
(72) Inventor: SCUOTTO, Mattia, I-39049 Vipiteno (IT)
(74) Representative: Eccetto, Mauro
(86) International application number: PCT/IB2013/058713
(87) International publication number: WO 2014/045246

(56) References cited:
- WO-A1-92/02982
- JP-A- S5 788 845
- US-A- 4 617 725
- US-A1- 2010 096 944
- US-A1- 2011 210 558

## Description

### TECHNICAL FIELD

The present invention relates to an active assembly of a wind turbine rotating electric machine.

### BACKGROUND ART

Wind turbines are known to employ rotating electric machines of the type in which a rotor rotates about an axis of rotation with respect to a stator. The rotor and the stator comprise respective, preferably tubular, supporting structures; and respective tubular active parts concentric with and facing one another, and fitted to the respective supporting structures. The active parts are separated by an air gap, which should preferably be constant and very small to optimize the efficiency of the rotating electric machine.

In this field, segmented active parts, i.e. active parts divided into a plurality of axial active segments, are preferably employed to enable easy assembly, removal, and maintenance of the active parts of the rotating electric machine, which is mounted tens of metres off the ground. In fact, each active segment can be removed and, if necessary, replaced with a new one relatively easily. The tubular active parts are secured to the respective supporting structures, which have respective mating faces for the active segments, and axial grooves for guiding and possibly fixing the respective active segments in position. The active segments of the stator normally have one or more active assemblies, by which is meant an assembly comprising a magnetic guide with at least two slots separated by a tooth; and a coil made of electric conductors and wound to fill the slots and form two heads close to the opposite ends of the tooth.

The efficiency of the electric machine depends on the extent to which the slots on each active assembly are filled. Some examples is given in US 2011/210,558 and US 4,617,725.

Moreover, to reduce magnetic flux losses, and to reduce the size of the ends of the segments and so make the segments easier to handle, the heads of the coils must project as little as possible from the magnetic guide.

### DISCLOSURE OF INVENTION

It is an object of the present invention to provide an active assembly designed to optimize electric efficiency and easy handling.

According to the present invention, there is provided an active assembly of a wind turbine rotating electric machine, the active assembly comprising a magnetic guide having two slots separated by a tooth with a plane of symmetry; and a plurality of electric conductors, each with a substantially rectangular cross section and wound edgewise about the tooth to fill the slots and form two heads close to the opposite ends of the tooth, each head comprising a plurality of adjacent U-shaped turns of the electric conductors; and wherein the width of each electric conductor is less than a third of the distance between the electric conductor and the plane of symmetry of the tooth.

Because of the rectangular cross section of the electric conductors, the slots can be filled relatively evenly, and the electric conductors can all be folded into a U to form compact, closely-packed heads. In fact, providing the geometric conditions claimed are conformed with, the electric conductor may be folded edgewise without damaging it.

In a preferred embodiment of the present invention, all the electric conductors inside the slots are the same width.

This solution has the major advantage of employing only one type of electric conductor.

Preferably, the width of each slot substantially equals a whole multiple of the width of the electric conductors.

The size of the slot is based on the size of the electric conductors.

In an alternative embodiment of the present invention, some of said electric conductors are of different widths; the electric conductors of larger width being located further from the plane of symmetry of the tooth than the electric conductors of smaller width.

This technical solution reduces the number of electric conductors needed to fill the slot. Reducing the number of conductors improves the efficiency of the rotating electric machine by reducing the space occupied by the electric conductor insulation, and the voids formed by the rounded corners of the rectangular cross section of the electric conductor.

Preferably, the respective widths of the electric conductors increase as a function of the distance between the electric conductors and the plane of symmetry of the tooth.

The conductor furthest from the plane of symmetry may be much wider than the one closest to the plane of symmetry. Not necessarily, the width increases linearly with the distance from the plane of symmetry of the tooth.

In this configuration, the width of the slot substantially equals the sum of the widths of all the electric conductors.

The present invention also relates to an active segment.

According to the present invention, there is provided a wind turbine rotating electric machine active segment comprising at least one active assembly as defined above.

The present invention also relates to a wind turbine rotating electric machine.

According to the present invention, there is provided a wind turbine rotating electric machine; the rotating electric machine being a synchronous, permanent-magnet type, and comprising a stator, and a rotor which rotates about an axis of rotation about the stator; the stator comprising a tubular supporting structure, a tubular active part fitted to the supporting structure, and a plurality of active assemblies arranged uniformly about the axis of rotation to form said active part, and as defined above; and the rotor comprising a further tubular supporting structure, and a further tubular active part fitted to the further supporting structure.

The rotating electric machine is thus highly efficient and easy to maintain.

The present invention also relates to a wind turbine for producing electric energy.

According to the present invention, there is provided a wind turbine for producing electric energy; the wind turbine comprising a vertical structure and a main frame for supporting in an elevated position a rotating electric machine as defined above.

### BRIEF DESCRIPTION OF THE DRAWINGS

A number of non-limiting embodiments of the present invention will be described by way of example with reference to the attached drawings, in which :
Figure 1 shows a partly sectioned side view, with parts removed for clarity, of a wind turbine to which the present invention may advantageously be applied;
Figure 2 shows a larger-scale cross section, with parts removed for clarity, of a rotating electric machine of the Figure 1 wind turbine and comprising active assemblies in accordance with the present invention;
Figure 3 shows a larger-scale, partly sectioned view in perspective, with parts removed for clarity, of an electric conductor of the Figure 2 active assemblies;
Figure 4 shows a partly sectioned plan view, with parts removed for clarity, of an active assembly in accordance with the present invention;
Figure 5 shows a larger-scale cross section, with parts removed for clarity, of a detail of the Figure 4 active assembly;
Figure 6 shows a partly sectioned plan view, with parts removed for clarity, of an active assembly in accordance with a further embodiment of the present invention;
Figure 7 shows a larger-scale cross section, with parts removed for clarity, of the Figure 6 active assembly.

### BEST MODE FOR CARRYING OUT THE INVENTION

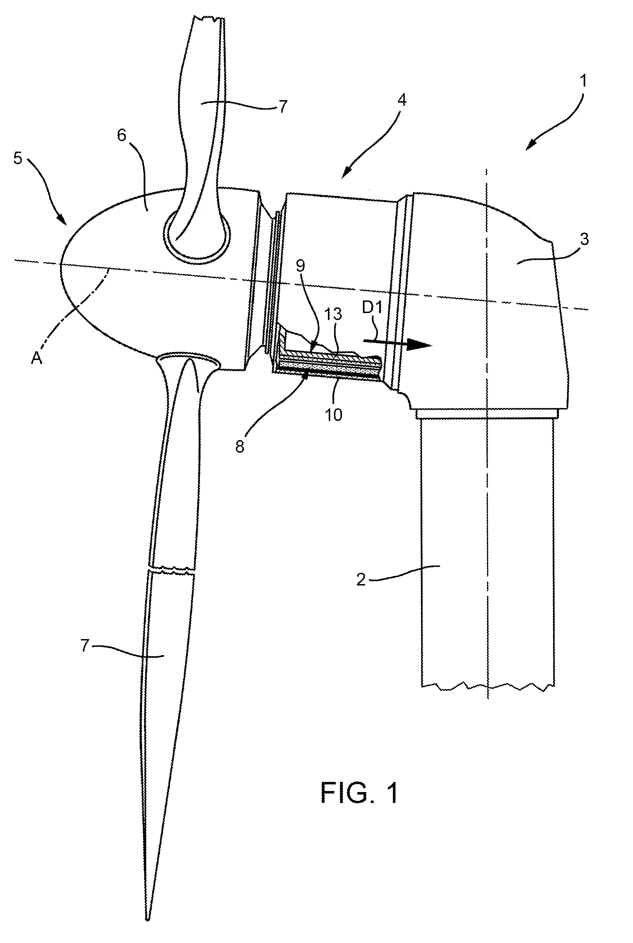

Number 1 in Figure 1 indicates as a whole a wind turbine for producing electric energy. Wind turbine 1 is a direct-drive type. In the example shown, wind turbine 1 comprises a vertical structure 2; a main frame 3 fitted in rotary manner to the top of vertical structure 2; a rotating electric machine 4; and a blade assembly 5 which rotates about an axis of rotation A. Rotating electric machine 4 is located between main frame 3 and blade assembly 5, and, in addition to producing electric energy, also serves to support blade assembly 5 and to transmit forces and moments induced by blade assembly 5 and rotating electric machine 4 to main frame 3.

In the example shown, main frame 3 is defined by a curved, tubular nacelle.

Blade assembly 5 comprises a hollow hub 6 connected to rotating electric machine 4; and a plurality of blades 7.

Rotating electric machine 4 extends about axis of rotation A, and is substantially tubular to form a passage between the hollow main frame 3 and hollow hub 6. Rotating electric machine 4 comprises a stator 8; and a rotor 9 located inside stator 8, and which rotates with respect to stator 8 about axis of rotation A

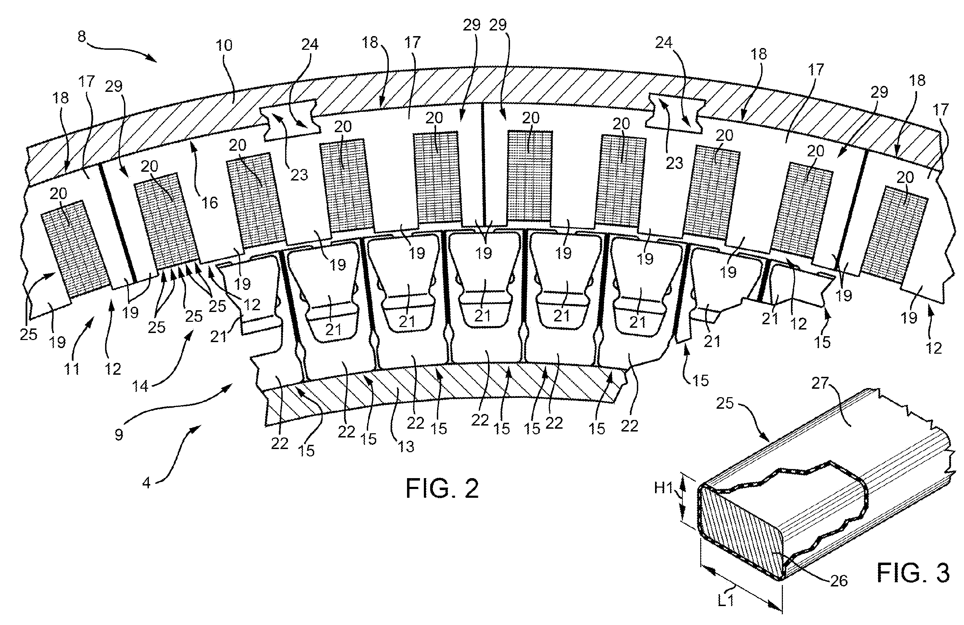

With reference to Figure 2, stator 8 comprises a tubular supporting structure 10; and a tubular active part 11 comprising a plurality of axial active segments 12. Similarly, rotor 9 comprises a tubular supporting structure 13; and a tubular active part 14 comprising a plurality of axial active segments 15. As shown in Figure 1, supporting structure 10 is connected to main frame 3, and supporting structure 13 is connected to blade assembly 5.

Supporting structure 10 has a mating face 16 - in the example shown, a cylindrical mating face - along which active segments 12 rest. In the example shown, each active segment 12 comprises a lamination pack 17, which is substantially prismatic in shape, extends mainly axially, and has a mating face 18 designed to rest on mating face 16, and a plurality of teeth 19 projecting on the opposite side to mating face 18; and a plurality of coils 20 wound about teeth 19 to define field poles.

More specifically, each segment 15 comprises an assembly 21 of magnetic guides and permanent magnets; and a gripper 22 for gripping assembly 21. Gripper 22 is positioned resting on and fixed to tubular structure 13.

The system for locking segments 12 is designed to fix each segment 12 to tubular structure 10 independently of the other segments 12. Accordingly, supporting structure 10 has a plurality of grooves 23, which extend inside the body of supporting structure 10, along mating face 16. Grooves 23 themselves define locks for locking active segments 12, and cooperate with further locks (not shown) designed to cooperate with grooves 23.

In the example shown, supporting structure 10 has a number of grooves 23 equal to the number of segments 12. And each segment 12 has a groove 24 designed to face and communicate with a respective groove 23.

Each coil 20 is defined by a plurality of electric conductors 25, each wound about a tooth 19. In the Figure 3 example, five conductors 25 are wound about tooth 19.

Active segments 12 and 15 are removable selectively from rotating electric machine 4 in a direction D1, and are insertable selectively onto rotating electric machine 4 in the opposite direction to direction D1.

With reference to Figure 3, each conductor 25 has a substantially rectangular cross section, a width L1 (long side), and a height H1 (short side). The cross section of electric conductor 25, in fact, differs slightly from a rectangle by having rounded corners. Each conductor 25 comprises a metal core 26, and an insulating sheath 27 covering metal core 26. Electric conductor 25 is particularly rigid, and can be deformed permanently lengthwise into various shapes. Electric conductor 25, with the technical characteristics described, is normally referred to as a 'flat' because of its flat shape.

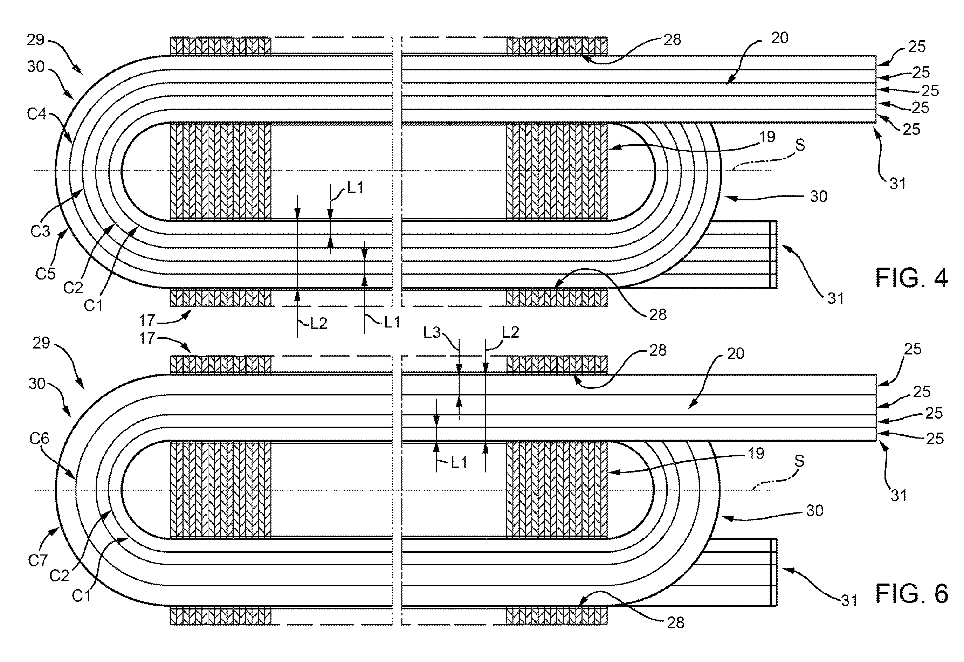

With reference to Figure 4, the assembly defined by the portion of lamination pack 17 with a tooth 19 and two slots 28 on opposite sides of tooth 19, and by a coil 20 wound about tooth 19, is referred to as active assembly 29. In addition to two parallel portions housed inside slots 28, coil 20 also comprises two heads 30 at opposite ends of tooth 19, and two connecting ends 31.

Electric conductors 25 are folded edgewise about tooth 19 at heads 30. More specifically, electric conductors 25 are wound about tooth 19 in a pattern of concentric spirals or similar spirals. In other words, a first electric conductor 25 is wound directly about a tooth 19 along a first spiral path; and a second electric conductor 25 is wound directly about the first electric conductor 25 along a second spiral path. The other electric conductors 25 are wound in further patterns similar to those of the first and second electric conductor 25. And, depending on the location of electric conductors 25 inside slots 28, electric conductors 25 define turns C1, C2, C3, C4, C5, which increase in radius of curvature from tooth 19.

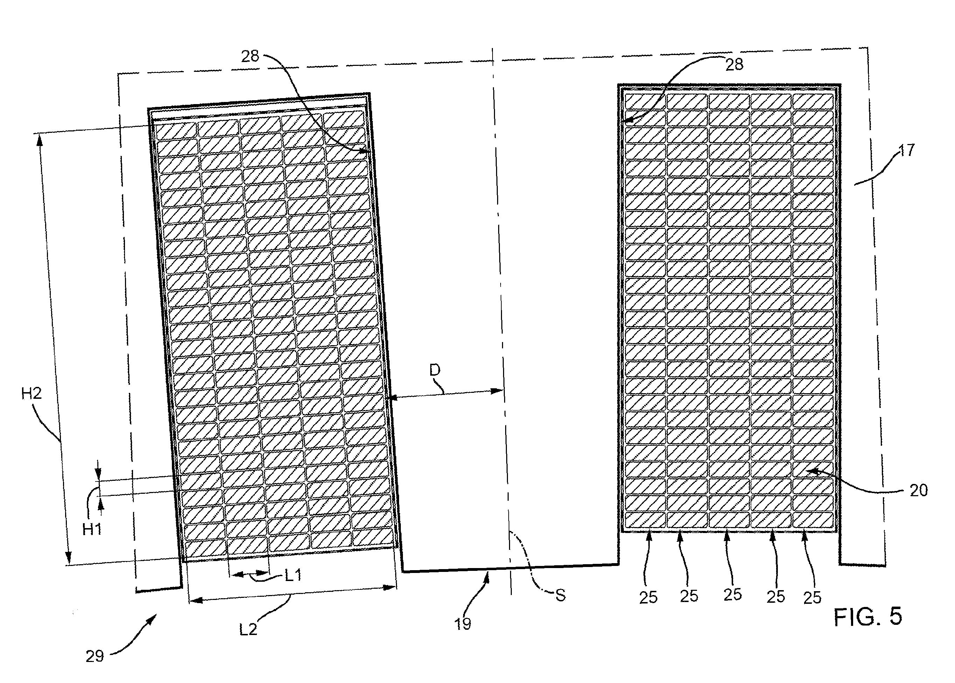

With reference to Figure 5, each tooth 19 has a plane of symmetry S, which substantially also defines the plane of symmetry of coil 20. In the example shown, the width L2 of slots 28 substantially equals a whole multiple of the width L1 of electric conductors 25; or conversely, the width L1 of electric conductors 25 substantially equals a submultiple of the width L2 of slots 28. The width L1 of the electric conductor is selected so that it is less than a third of the distance D between electric conductor 25 and the plane of symmetry S of tooth 19.

With reference to Figure 4, conformance with the above condition allows electric conductor 25 to be folded edgewise to form turn C1 and, consequently, also turns C2, C3, C4 C5 at heads 30 without damaging metal core 26 or insulating sheath 27 of electric conductor 25 (Figure 3).

In the example shown, for the sake of simplicity and component part standardization, electric conductors 25 are all of the same width L1 and the same size in general. This way, turns C1, C2, C3 C4, C5 are all U-shaped, and the resulting heads 30 are closely-packed and compact with very little jut-out.

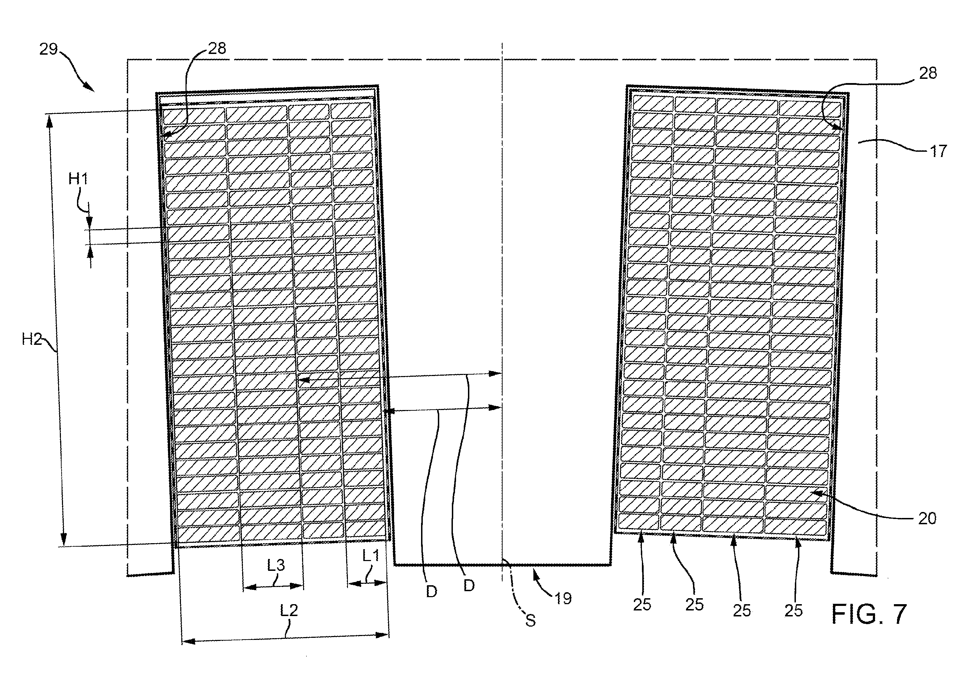

With reference to Figures 6 and 7, a preferred embodiment of the present invention employs electric conductors 25 of the same height H1, but different widths L1 and L3, where L3 is greater than L1.

Basically, the principle employed is to use electric conductors 25 increasing in width with the distance D from the plane of symmetry S of tooth 19. This way, slot 28 is filled with fewer electric conductors 25 - in the example shown, four as opposed to the five conductors in Figures 4 and 5.

With reference to Figure 6, the four electric conductors 25 form, at heads 30 and working outwards of tooth 19, four turns C1, C2, C6, C7 of increasing radius of curvature. The increasing width of electric conductor 25 as a function of the distance from tooth 19 is not essential, but is preferable.

Clearly, changes may be made to the active assembly according to the present invention without, however, departing from the protective scope of the accompanying Claims.

## Claims

1. An active assembly of a wind turbine rotating electric machine, the active assembly (29) comprising a magnetic guide having two slots (28) separated by a tooth (19) with a plane of symmetry (S); and a plurality of electric conductors (25), each with a substantially rectangular cross section and wound edgewise repeatedly about the tooth (19) to at least partly fill the slots (28) and form two heads (30) close to the opposite ends of the tooth (19), each head (30) comprising a plurality of adjacent U-shaped turns (C1, C2, C3, C4, C5 ; C1, C2, C6, C7) of the electric conductors (25); and wherein the width (L1; L3) of each electric conductor (25) is less than a third of the distance (D) between the electric conductor (25) and the plane of symmetry of the tooth (19).

2. The active assembly as claimed in Claim 1, wherein all the electric conductors inside the slots (28) are the same width (L1).

3. The active assembly as claimed in Claim 1 or 2, wherein the width (L2) of each slot (28) substantially equals a whole multiple of the width (L1) of the electric conductors (25).

4. The active assembly as claimed in Claim 1, wherein at least some of said electric conductors (25) are of different widths (L1; L3); the electric conductors (25) of larger width (L3) being located further from the plane of symmetry (S) of the tooth (19) than the electric conductors (25) of smaller width (L1).

5. The active assembly as claimed in Claim 4, wherein the respective widths (L1; L3) of the electric conductors (25) increase as a function of the distance (D) between the electric conductors (25) and the plane of symmetry (S) of the tooth (19).

6. The active assembly as claimed in claim 4 or 5, wherein the width (L2) of each slot (28) substantially equals the sum of the widths (L1; L3) of all the electric conductors (25) inside the slot (28).

7. The active assembly as claimed in any one of the foregoing Claims, wherein each electric conductor (25) has a metal core (26), and an insulating sheath (27) covering the metal core (26).

8. A wind turbine rotating electric machine active segment comprising at least one active assembly (29) as claimed in any one of the foregoing Claims.

9. The active segment as claimed in Claim 8, and comprising a mating face (18) on the opposite side to the tooth (19); and a locking member (24) located along the mating face (18).

10. A wind turbine rotating electric machine; the rotating electric machine (4) being a synchronous, permanent-magnet type, and comprising a stator (8), and a rotor (9) which rotates about an axis of rotation (A) about the stator (8); the stator (8) comprising a tubular supporting structure (10), a tubular active part (11) fitted to the supporting structure, and a plurality of active assemblies (29) arranged about the axis of rotation (A) to form said active part (11) and as claimed in any one of Claims 1 to 7; and the rotor (9) comprising a further tubular supporting structure (13), and a further tubular active part (14) fitted to the further supporting structure (13).

11. A wind turbine for producing electric energy; the wind turbine (1) comprising a vertical structure (2) and a main frame (3) for supporting in an elevated position a rotating electric machine (4) as claimed in Claim 10.

## Patentansprüche

1. Aktive Anordnung einer elektrischen Drehmaschine einer Windturbine, wobei die aktive Anordnung (29) eine Magnetführung mit zwei Schlitzen (28), welche durch einen Zahn (19) mit einer Symmetrieebene (S) getrennt sind; und mehrere elektrische Leiter (25) umfasst, die jeweils einen im Wesentlichen rechteckigen Querschnitt haben und hochkant wiederholt um den Zahn (19) gewickelt sind, um die Schlitze (28) zumindest teilweise zu füllen und zwei Köpfe (30) nahe den einander abgewandten Enden des Zahns (19) zu bilden, wobei jeder Kopf (30) mehrere aneinander grenzende U-förmige Windungen (C1, C2, C3, C4, C5; C1, C2, C6, C7) der elektrischen Leiter (25) umfasst; und wobei die Breite (L1; L3) jedes elektrischen Leiters (25) kleiner als ein Drittel des Abstands (D) zwischen dem elektrischen Leiter (25) und der Symmetrieebene des Zahns (19) ist.

2. Aktive Anordnung nach Anspruch 1, wobei alle elektrische Leiter in den Schlitzen (28) die gleiche Breite (L1) haben.

3. Aktive Anordnung nach Anspruch 1 oder 2, wobei die Breite (L2) jedes Schlitzes (28) im Wesentlichen gleich einem ganzen Vielfachen der Breite (L1) der elektrischen Leiter (25) ist.

4. Aktive Anordnung nach Anspruch 1, wobei zumindest einige der elektrischen Leiter (25) unterschiedliche Breiten (L1; L3) haben; wobei die elektrischen Leiter (25) mit größerer Breite (L3) von der Symmetrieebene (S) des Zahns (19) weiter entfernt liegen als die elektrischen Leiter (25) mit kleinerer Breite (L1).

5. Aktive Anordnung nach Anspruch 4, wobei die jeweiligen Breiten (L1; L3) der elektrischen Leiter (25) in Abhängigkeit des Abstands (D) zwischen den elektrischen Leitern (25) und der Symmetrieebene (S) des Zahns (19) größer werden.

6. Aktive Anordnung nach Anspruch 4 oder 5, wobei die Breite (L2) jedes Schlitzes (28) im Wesentlichen gleich der Summe der Breiten (L1; L3) aller elektrischen Leiter (25) in dem Schlitz (28) ist.

7. Aktive Anordnung nach einem der vorhergehenden Ansprüche, wobei jeder elektrische Leiter (25) einen Metallkern (26) und eine den Metallkern (26) bedeckende Isolierhülle (27) hat.

8. Aktives Segment einer elektrischen Drehmaschine einer Windturbine, umfassend zumindest eine aktive Anordnung (29) nach einem der vorhergehenden Ansprüche.

9. Aktives Segment nach Anspruch 8, und ferner umfassend eine Passfläche (18) auf der dem Zahn (19) gegenüber liegenden Seite; und ein Verriegelungselement (24), welches entlang der Passfläche (18) angeordnet ist.

10. Elektrische Drehmaschine einer Windturbine; wobei die elektrische Drehmaschine (4) eine Synchronmaschine mit Permanentmagnet ist und einen Stator (8) und einen Rotor (9) umfasst, welcher sich um eine Drehachse (A) um den Stator (8) dreht; wobei der Stator (8) eine rohrförmige Stützstruktur (10), einen rohrförmigen aktiven Teil (11), welcher an der Stützstruktur angebracht ist, und mehrere aktive Anordnungen (29) umfasst, welche um die Drehachse (A) herum angeordnet sind, um den aktiven Teil (11) zu bilden, und gemäß einem der Ansprüche 1 bis 7; und wobei der Rotor (9) eine weitre rohrförmige Stützstruktur (13) und einen weiteren rohrförmigen aktiven Teil (14) umfasst, welcher an der weiteren Stützstruktur (13) angebracht ist.

11. Windturbine zum Erzeugen von elektrischer Energie; wobei die Windturbine (1) eine vertikale Struktur (2) und einen Hauptrahmen (3) zum Halten einer elektrischen Drehmaschine (4) nach Anspruch 10 in einer erhöhten Position umfasst.

## Revendications

1. Ensemble actif d'une machine électrique tournante d'éolienne, l'ensemble actif (29) comprenant un guide magnétique qui comporte deux fentes (28) séparées par une dent (19) présentant un plan de symétrie (S) ; et une pluralité de conducteurs électriques (25) qui ont chacun une section transversale sensiblement rectangulaire et qui sont enroulées au niveau des bords, à plusieurs reprises, sur la dent (19) pour remplir au moins partiellement les fentes (28) et former deux têtes (30) proches des extrémités opposées de la dent (19), chaque tête (30) comprenant une pluralité de spires adjacentes (C1, C2, C3, C4, C5 ; C1, C2, C6, C7) en forme de U des conducteurs électriques (25), et la largeur (L1 ; L3) de chaque conducteur électrique (25) étant inférieure à un tiers de la distance (D) entre le conducteur électrique (25) et le plan de symétrie de la dent (19).

2. Ensemble actif selon la revendication 1, dans lequel tous les conducteurs électriques à l'intérieur des fentes (28) ont la même largeur (L1).

3. Ensemble actif selon la revendication 1 ou 2, dans lequel la largeur (L2) de chaque fente (28) est sensiblement égale à un multiple entier de la largeur (L1) des conducteurs électriques (25).

4. Ensemble actif selon la revendication 1, dans lequel au moins certains desdits conducteurs électriques (25) sont de largeurs différentes (L1 ; L3) ; les conducteurs électriques (25) de plus grande largeur (L3) étant situés plus loin du plan de symétrie (s) de la dent (19) que les conducteurs électriques (25) de plus petite largeur (L1).

5. Ensemble actif selon la revendication 4, dans lequel les largeurs respectives (L1 ; L3) des conducteurs électriques (25) augmentent en fonction de la distance (D) entre les conducteurs électriques (25) et le plan de symétrie (S) de la dent (19).

6. Ensemble actif selon la revendication 4 ou 5, dans laquelle la largeur (L2) de chaque fente (23) est sensiblement égale à la somme des largeurs (L1, L3) de tous les conducteurs électriques (25) à l'intérieur de la fente (28).

7. Ensemble actif selon l'une quelconque des revendications précédentes, dans lequel chaque conducteur électrique (25) comporte un noyau métallique (26) et une gaine isolante (27) recouvrant le noyau métallique (26).

8. Segment actif de machine électrique tournante d'éolienne comprenant au moins un ensemble actif (29) selon l'une quelconque des revendications précédentes.

9. Segment actif selon la revendication 8, et comprenant une face d'accouplement (18) du côté opposé par rapport à la dent (19) ; et un élément de verrouillage (24) situé le long de la face d'accouplement (18).

10. Machine électrique tournante d'éolienne, la machine électrique tournante (4) étant du type synchrone à aimants permanents, et comportant un stator (8) et un rotor (9) qui tourne sur un axe de rotation (A) autour du stator (8) ; le stator (8) comprenant une structure de support tubulaire (10), une partie active tubulaire (11) montée sur la structure de support, et une pluralité d'ensembles actifs (29) disposés autour de l'axe de rotation (A) pour former ladite partie active (11) et selon l'une quelconque des revendications 1 à 7, et le rotor (9) comprenant une autre structure de support tubulaire (13) et une autre partie active tubulaire (14) montée sur l'autre structure de support supplémentaire (13).

11. Éolienne pour la production d'énergie électrique ; l'éolienne (1) comprenant une structure verticale (2) et un cadre principal (3) destiné à supporter dans une position surélevée une machine électrique tournante (4) selon la revendication 10.
